# EUROPÄISCHE PATENTSCHRIFT

(11) **EP 1 661 767 B1**
(45) Veröffentlichungstag und Bekanntmachung des Hinweises auf die Patenterteilung: **14.03.2007**
(21) Anmeldenummer: 04028006.7
(22) Anmeldetag: 25.11.2004
(51) Int. Cl.: B60R 21/01

(54) **Vorrichtung und Verfahren zum Erkennen der Belegung eines Sitzes**
Device and method for detecting occupancy of a seat
Dispositif et procédé pour détecter l'occupation d'un siège

(43) Veröffentlichungstag der Anmeldung: 31.05.2006
(73) Patentinhaber: Delphi Technologies, Inc., Troy, MI 48007 (US)
(72) Erfinder: Fischer, Thomas, 57482 Wenden (DE); Oel, Ludger, 59590 Geseke (DE)
(74) Vertreter: Manitz, Finsterwald & Partner GbR

(56) Entgegenhaltungen:
- WO-A-03/004318
- US-A- 5 612 876
- US-A1- 2004 212 180

## Beschreibung

Die vorliegende Erfindung betrifft eine Vorrichtung und ein Verfahren zum Erkennen der Belegung eines Sitzes nach dem Oberbegriff der Ansprüche 1 bzw. 8, insbesondere eines Kraftfahrzeugsitzes, bei der zur Detektion einer auf die Sitzfläche wirkenden Kraft eine Sensoreinrichtung vorgesehen ist, um die Kraft für die Erkennung klassifizieren zu können. Unter Klassifizieren wird hierbei verstanden, dass die Vorrichtung dazu beitragen soll, eine Unterscheidung dahingehend zu treffen, wer sich tatsächlich auf dem Sitz befindet, um Komponenten des Fahrzeugsicherheitssystems wie beispielsweise Airbag oder Gurtstraffer angepasst ansteuern zu können.

Vorrichtungen der eingangs genannten Art sind grundsätzlich bekannt (vgl. auch US-A-5,612,876). Hierbei kann die Sensoreinrichtung als mit einem Fluid gefüllte Sensormatte ausgebildet sein, wobei eine Erkennung der Sitzbelegung durch eine Bestimmung der Erhöhung des Fluiddrucks in der Sensormatte bei Beaufschlagung des Sitzes mit einem bestimmten Gewicht erfolgt.

Da die von der Sensoreinrichtung ausgegebenen Signale nicht zur Klassifizierung ausreichen, werden bei bekannten Vorrichtungen ergänzend Signale von Gurtspannungssensoren und Beschleunigungssensoren aufgenommen.

Die WO-A-03/004318 zeigt die Merkmale des Oberbegriffs der unabhängigen Ansprüche 1 und 8.

Es ist die Aufgabe der Erfindung, eine Vorrichtung und ein Verfahren der eingangs genannten Art derart weiterzubilden, dass eine Signalauswertung erleichtert ist.

Die Lösung dieser Aufgabe erfolgt durch die Merkmale der unabhängigen Ansprüche.

Durch die Erhöhung der Signalquellen aus dem Sitz, nämlich der Zahl der Sensormatten, kann bei geeigneter Form der Matten zuverlässig eine Erfassung und Klassifizierung der Sitzbelegung erfolgen. Es entfällt dann die Notwendigkeit, zusätzlich die Gurtspannung oder Beschleunigung zu messen. Schwerere und erwachsene Insassen sind auch größer und beaufschlagen die äußere Matte mit Gewichtskraft und sind so unterscheidbar.

Vorteilhafte Ausführungsformen der Erfindung sind in der Beschreibung, der Zeichnung sowie den Unteransprüchen beschrieben.

Nach einer vorteilhaften Ausführungsform kann eine der Sensormatten so geformt sein, dass sie geeignet ist, einen mit zwei Kufen versehenen Kindersitz zu detektieren. Hierzu kann es auch vorteilhaft sein, wenn die beiden Sensormatten ineinander verschachtelt sind, da hierdurch eine selektive Auswertung des auf die Sensormatten ausgeübten Druckes möglich ist.

Nach einer weiteren vorteilhaften Ausführungsform befindet sich in Draufsicht gesehen eine Sensormatte innerhalb der anderen Sensormatte.

Dies ermöglicht eine gute Unterscheidung, ob sich beispielsweise ein Kindersitz oder ein Erwachsener auf dem Sitz befindet oder ob beispielsweise ein Erwachsener geringer Größe bzw. geringen Gewichts oder aber ein Erwachsener mit durchschnittlichem oder hohem Gewicht sich auf dem Fahrzeugsitz befindet.

Vorteilhaft ist es ferner, wenn eine der Sensormatten derartig geformt ist, dass sie geeignet ist, Signale abzugeben, die alleine zum Erfassen des Zustands dienen können, dass eine Person die entweder zu den 5 % leichtesten oder 5 % schwersten ihres Geschlechts gehört, auf dem Sitz sitzt. Die Formung der Matten trägt also unterschiedlichen Gewichtsverteilungen bei verschiedenen Gesäßformen beim Menschen Rechnung.

Vorteilhaft ist die innere Matte im Wesentlichen rechteckig und weist zwei Arme auf, die zwei gegenüberliegende Rechtecksseiten verlängern und in das Innere der äußeren Matte hineinragen, d.h. in Richtung der Basis des U orientiert sind.

Eine besonders gute Sensitivität und Unterscheidbarkeit ergibt sich, wenn zwischen die beiden Arme ein Vorsprung der äußeren Matte hineinragt. Dieser kann dreieckig, trapezförmig oder halbrund sein.

Weiterhin hat sich durch Versuche gezeigt, dass die Schenkel der U-Form der äußeren Matte nicht überall gleich breit sein müssen, sondern dass eine besonders gute Selektivität dadurch erzielt wird, dass die Schenkel an den Stellen, wo sie den Armen der inneren Matte benachbart sind, breiter sind als an denjenigen Stellen, an denen sie der Rechteckform der inneren Matte benachbart sind. Besonders vorteilhaft ist es auch, wenn die Schenkel der äußeren Matte an ihrer Innenseite benachbart zu dem rechteckigen Abschnitt der inneren Matte Aussparungen aufweisen, da hierdurch besonders gut unterschiedliche Beckenformen differenziert werden können.

Es ist vorteilhaft, wenn die äußere Sensormatte etwa die 1,5-fache bis 2,5-fache Fläche, vorzugsweise geringfügig mehr als die doppelte Fläche als die innere Sensormatte aufweisen, also etwa das 2 bis 2,25-fache der Fläche der inneren Matte. Die U-Form kann an ihrer breitesten Stelle bis zum 2,5-fachen der Rechtecksbreite breit sein und ist auch am Ende der Schenkel vorzugsweise mehr als doppelt so breit wie das Rechteck. In der Länge kann sie das Doppelte der Rechteckslänge (ohne Betrachtung der Arme) etwas überschreiten.

Die Erfindung betrifft auch ein Verfahren zum Erkennen der Belegung eines Sitzes, bei dem zwei in dem Sitz befindliche Sensormatten jeweils ein Drucksignal abgeben und die Drucksignale einzeln ausgewertet werden oder auch Summen und Differenzen gebildet werden und ebenfalls zur Auswertung herangezogen werden. Hierbei genügt das Signal einer innere Matte und die Summe deren Signals mit dem einer sie U-förmig umgebenden äußeren Matte.

Nachfolgend wird die Erfindung rein beispielhaft anhand einer vorteilhaften Ausführungsform und unter Bezug auf die Zeichnung beschrieben. Es zeigen:
- Fig. 1: eine Draufsicht auf zwei erfindungsgemäße Sensormatten; und
- Fig. 2: einen Graphen, in dem Drucksignale der Sensormatten dargestellt sind.

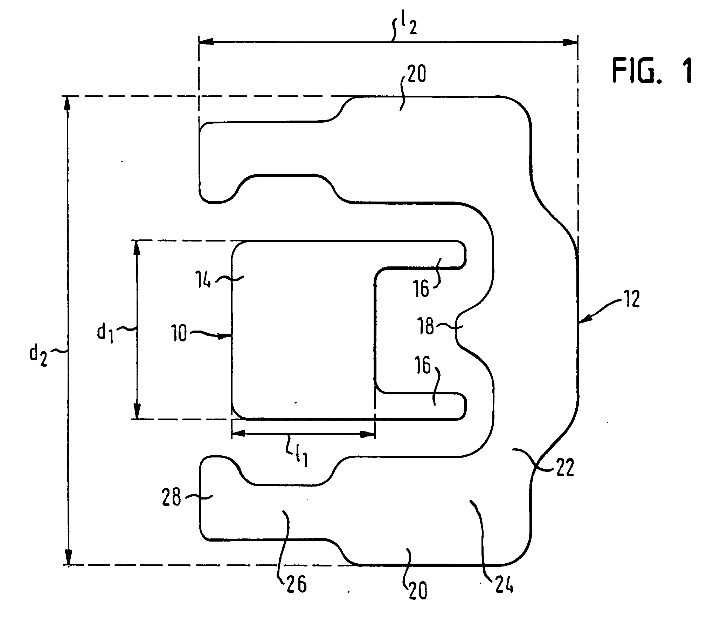

Fig. 1 zeigt eine Draufsicht auf eine Vorrichtung zur Erkennung der Belegung eines Sitzes, die eine flächenmäßig geschlossene innere Sensormatte 10 aufweist, die von einer äußeren Sensormatte 12 umfasst ist. Die äußere Sensormatte 12 weist in Draufsicht im Wesentlichen die Form eines U auf, wohingegen die innere Sensormatte 10 einen rechteckigen, annähernd quadratischen Abschnitt 14 besitzt, der etwa 85 % der Gesamtfläche beträgt. Von zwei gegenüberliegenden Seiten des Abschnitts 14 ragen zwei Arme 16 in Richtung der Basis der äußeren Matte 12, wobei die beiden Arme von zwei gegenüberliegenden, kürzeren Seiten des rechteckigen Abschnitts 14 wegstehen und dadurch zur Basis des U der äußeren Matte 12 hinweisen.

In dem zwischen den beiden Armen 16 liegenden Bereich weist die äußere Matte 12 einen zwischen die Arme 16 hineinragenden Vorsprung 18 auf, der annähernd trapezförmig ausgebildet ist.

Die seitlichen Schenkel 20 der U-förmigen äußeren Matte 12 beginnen ausgehend von der Basis des U an einem etwas verjüngten Abschnitt 22 und sind in einem Abschnitt 24 verbreitert, der benachbart zu den Armen 16 der inneren Matte 10 liegt. In einem sich daran anschließenden Abschnitt 26 weisen die beiden Schenkel 20 der äußeren Matte 12 sowohl an der Schenkelinnenseite wie auch an der Schenkelaußenseite Aussparungen auf, die auf einer Höhe mit dem rechteckigen Abschnitt 14 der inneren Matte 10 liegen. Hierdurch ergibt sich ein wiederum etwas verbreiterter Endabschnitt 28.

In Fig. 1 ist die Länge der Schenkel mit dem Bezugszeichen l₂ und die Breite der Basis mit dem Bezugszeichen d₂ bezeichnet, wohingegen die Länge des rechteckigen Abschnitts 14 der inneren Matte 10 mit l₁ und die sich parallel zur Basis erstreckende Breite dieses Abschnitts 14 mit d₁ bezeichnet ist. Wie zu erkennen ist, weist die U-förmige äußere Matte 12 eine Breite d₂ auf, die etwa 2,5-mal so groß wie die Breite d₁ des rechteckigen Abschnitts 14 ist. Die Länge l₂ ist etwa 2,5-mal so groß wie die Länge l₁ des rechteckigen Abschnitts 14. Die Länge der Arme 16 ist etwa 0,6-mal so groß wie die Länge l₁ des rechteckigen Abschnitts 14. Die Fläche der äußeren Matte 12 ist etwa 2,25-mal so groß wie die Fläche der inneren Matte 10.

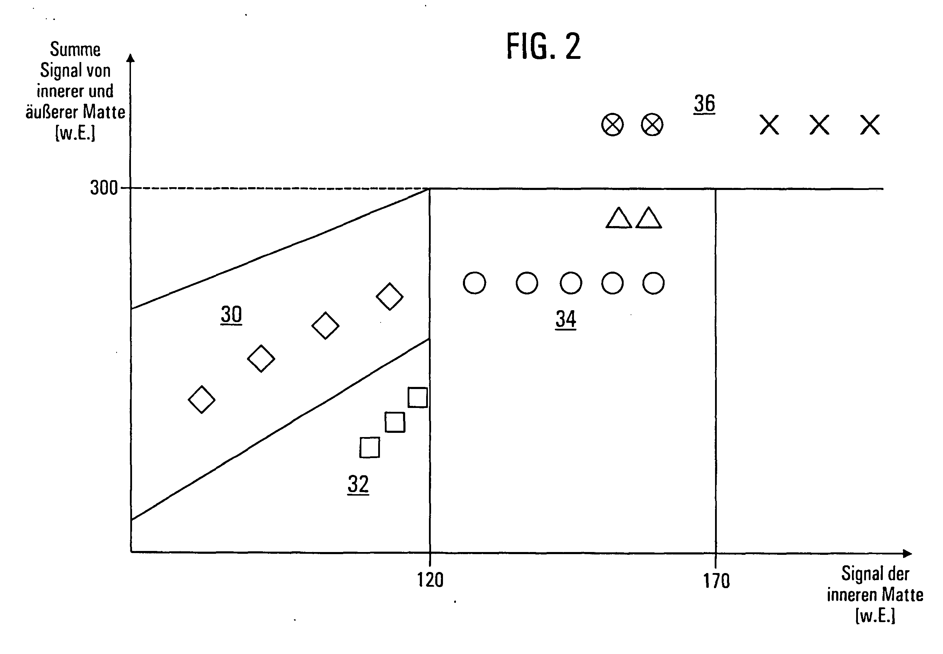

Fig. 2 veranschaulicht die Auswertung von Signalen von beiden Matten 10 und 12.

Aufgetragen ist auf der X-Achse das Signal von der inneren Sensormatte 10, und auf der Y-Achse ist die Summe der Signale von innerer Sensormatte 10 und äußerer Sensormatte 12 aufgetragen. Durch Bildung von Bereichen 30, 32, 34, 36 können die Belegungsarten des Sitzes voneinander klar unterschieden, d.h. klassifiziert werden.

Die Rauten im Bereich 30 repräsentieren ein Kind (etwa 12 Monate alt) in einem Kindersitz. Ein Gutteil des Signals kommt dabei von der äußeren Sensormatte 12, weil der Kindersitz auf Kufen steht und Druck auf die Abschnitte 24, 26 und 28 ausübt. Ein etwa sechsjähriges Kind drückt aufgrund seiner engstehenden Beckenknochen hingegen fast nur auf die innere Sensormatte 10 und ist daher im Wertebereich von dem Kindersitz zu unterscheiden (quadratische Werte im Bereich 32). In einem mittleren Bereich 34 findet man die Gruppe besonders leichter Erwachsener, die zum sogenannten 5-Perzentil gehören, d.h. zu den 5% der leichtesten ihres Geschlechts. Die Kreise im Bereich 34 repräsentieren Werte von Lebendpersonen und die Dreiecke solche von zugehörigen Testpuppen. Die Gruppe von Erwachsenen, die zum 50-Perzentil gehören, deren Gewicht also der statistische Median bei ihrem Geschlecht ist, ergibt Werte in einem oberen Bereich 36 des Graphen von Fig. 2 (durchgestrichene Kreise: Testpuppen, Kreuze: Lebendpersonen). Ergibt die Summe der Signale der beiden Matten 10 und 12 einen Wert von mehr als 300 (willkürliche Einheiten), so sitzt eine Normalperson mit zumindest durchschnittlichem Gewicht auf dem Sitz.

Die erfindungsgemäße Vorrichtung mit zwei Sensormatten und das erfindungsgemäße Verfahren der Auswertung der Signale von diesen beiden Matten erlaubt somit klar eine elektronische Erkennung unterschiedlicher Sitzbelegungssituationen, wie sie für die Steuerung der Auslösung von Airbags erforderlich ist. Die Gurtspannungs- und Beschleunigungssensoren aus dem Stand der Technik sind nicht mehr erforderlich. Das Gesamtsystem ist vereinfacht.

## Patentansprüche

1. Vorrichtung zum Erkennen der Belegung eines Sitzes, insbesondere eines Kraftfahrzeugsitzes, bei der zur Detektion einer auf die Sitzfläche wirkenden Kraft eine Sensoreinrichtung vorgesehen ist, um die Kraft für die Erkennung klassifizieren zu können, wobei
die Sensoreinrichtung zwei Sensormatten (10, 12) umfasst, die unabhängig voneinander jeweils den auf sie ausgeübten Druck detektieren, **dadurch gekennzeichnet, dass** eine innere (10) und eine äußere (12) Sensormatte vorgesehen sind wobei die innere Matte (10) im Wesentlichen flächenmäßig geschlossen ist und von der äußeren Matte (12) halbkreisförmig oder U-förmig umgeben wird.

2. Vorrichtung nach Anspruch 1,
**dadurch gekennzeichnet, dass**
dass die Sensormatten ineinander verschachtelt sind.

3. Vorrichtung nach Anspruch 1 oder 2,
**dadurch gekennzeichnet, dass**
sich in Draufsicht eine Sensormatte (10) innerhalb der anderen Sensormatte (12) befindet.

4. Vorrichtung nach Anspruch 1, **gekennzeichnet durch** eine im Wesentlichen rechteckige innere Matte (10) mit zwei Armen (16), die zwei gegenüberliegende Rechtecksseiten verlängern und in das Innere der äußeren Matte (12) hineinragen.

5. Vorrichtung nach Anspruch 4,
**dadurch gekennzeichnet, dass**
die äußere Matte (12) einen zwischen die Arme (16) der inneren Matte (10) ragenden, vorzugsweise dreieckigen oder trapezförmigen Vorsprung (18) aufweist.

6. Vorrichtung nach Anspruch 4 oder 5,
**dadurch gekennzeichnet, dass**
die Schenkel (20) des U dort (24), wo sie die Arme (16) der inneren Matte (10) umgeben, eine höhere Schenkelbreite aufweist als dort (26), wo sie einen rechteckigen Abschnitt (14) der inneren Matte (10) umgeben, wobei vorzugsweise der Endabschnitt (28) der Schenkel (20) wieder verbreitert ist.

7. Vorrichtung nach einem der Ansprüche 1 bis 6, wobei die äußere Matte (12) die etwa 1,5-fache bis 2,5-fache Fläche der Fläche der inneren Matte (10) aufweist.

8. Verfahren zum Erkennen der Belegung eines Sitzes, insbesondere Kraftfahrzeugsitzes, bei dem
- zwei in dem Sitz befindliche Sensormatten jeweils ein Drucksignal abgeben, und
- die Drucksignale einzeln ausgewertet werden und/oder ihre Summe und/oder Differenz gebildet wird und ebenfalls zur Auswertung herangezogen wird,
**dadurch gekennzeichnet, dass** das Drucksignal aus einer inneren Sensormatte (10) und die Summe mit dem Signal aus einer diese U-förmig umgebenden äußeren Sensormatte (12) herangezogen wird.

## Claims

1. An apparatus for the recognition of the occupancy of a seat, in particular of a motor vehicle seat, in which a sensor device is provided for the detection of a force acting on the seat area in order to be able to classify the force for the recognition, wherein the sensor device includes two sensor mats (10, 12) which each detect the pressure respectively exerted on them independently of one another,
**characterized in that**
an inner (10) and an outer (12) sensor mat are provided, with the inner mat (10) being substantially closed area-wise and being surrounded in a semicircular or U-shaped manner by the outer mat (12).

2. An apparatus in accordance with claim 1, **characterized in that** the sensor mats are interengaged.

3. An apparatus in accordance with claim 1 or claim 2, **characterized in that** one sensor mat (10) is located within the other sensor mat (12) in a plan view.

4. An apparatus in accordance with claim 1, **characterized by** a substantially rectangular inner mat (10) having two arms (16) which extend two oppositely disposed rectangle sides and project into the interior of the outer mat (12).

5. An apparatus in accordance with claim 4, **characterized in that** the outer mat (12) has a projection (18) which is preferably triangular or trapezoidal and which projects between the arms (16) of the inner mat (10).

6. An apparatus in accordance with claim 4 or claim 5, **characterized in that** the limbs (20) of the U have a greater limb width at the point (24) where they surround the arms (16) of the inner mat (10) than at the point (26) where they surround a rectangular section (14) of the inner mat (10), with the end section (28) of the limbs (20) again preferably diverging.

7. An apparatus in accordance with any one of the claims 1 to 6, wherein the outer mat (12) has approximately 1.5 times to 2.5 times the surface area of the surface area of the inner mat (10).

8. A method for the recognition of the occupancy of a seat, in particular of a motor vehicle seat, wherein
- two sensor mats located in the seat each emit a pressure signal; and
- the pressure signals are evaluated individually and/or their sum and/or difference is formed and is likewise used for the evaluation,
**characterized in that** the pressure signal from an inner sensor mat (10) and the sum with the signal from an outer sensor mat (12) surrounding it in U shape is used.

## Revendications

1. Dispositif pour reconnaître l'occupation d'un siège, en particulier d'un siège de véhicule automobile, dans lequel il est prévu un système de capteur pour détecter la force agissant sur la surface d'assise pour pouvoir classifier la force pour la reconnaissance, dans lequel le système de capteur comprend deux nattes de captage (10, 12) qui détectent indépendamment l'une de l'autre la pression respective exercée sur elles-mêmes, **caractérisé en ce qu'**il est prévu une natte de captage intérieure (10) et une nappe de captage extérieure (12), la natte intérieure (10) étant sensiblement fermée sur sa surface et entourée en forme de demi-cercle ou en forme de U par la natte extérieure (12).

2. Dispositif selon la revendication 1, **caractérisé en ce que** les nattes de captage sont imbriquées l'une dans l'autre.

3. Dispositif selon la revendication 1 ou 2, **caractérisé en ce qu'**en vue de dessus, une natte de captage (10) se trouve à l'intérieur de l'autre natte de captage (12).

4. Dispositif selon la revendication 1, **caractérisé par** une natte intérieure (10) sensiblement rectangulaire avec deux bras (16) qui prolongent deux côtés opposés du rectangle et qui font saillie à l'intérieur de la natte extérieure (12).

5. Dispositif selon la revendication 4, **caractérisé en ce que** la natte extérieure (12) présente une saillie (18) de préférence triangulaire ou en forme de trapèze qui fait saillie entre les bras (16) de la natte intérieure (10).

6. Dispositif selon la revendication 4 ou 5, **caractérisé en ce que** les branches (20) du U, là (24) où elles entourent les bras (16) de la natte intérieure (10), présentent une largeur de branche plus importante que là (26) où elles entourent un tronçon rectangulaire (14) de la natte intérieure (10), le tronçon terminal (28) des branches (20) étant de préférence de nouveau élargi.

7. dispositif selon l'une des revendications 1 à 6, **caractérisé en ce que** la natte extérieure (12) présente une surface qui est approximativement 1,5 fois à 2,5 fois la surface de la natte intérieure (10).

8. Procédé de reconnaissance de l'occupation d'un siège, en particulier d'un siège de véhicule automobile, dans lequel,
- deux nattes de captage se trouvant dans le siège fournissent chacune un signal de pression, et
- on analyse les signaux de pression individuellement et/ou on forme leur somme et/ou leur différence et on la met éventuellement à contribution pour l'analyse, **caractérisé en ce qu'**on met à contribution le signal de pression provenant d'une natte de captage intérieure (10) et la somme avec le signal provenant d'une natte de captage extérieure (12) entourant celle-ci à la manière d'un U.
